# EUROPÄISCHE PATENTANMELDUNG

(11) **EP 4 257 937 A1**
(43) Veröffentlichungstag der Anmeldung: **11.10.2023**
(21) Anmeldenummer: 23166537.3
(22) Anmeldetag: 04.04.2023
(51) Int. Cl.: G01F 23/284, G01F 25/00, G01F 1/00

(54) **DOSIERVORRICHTUNG ZUM DOSIEREN EINES FLÜSSIGEN MEDIUMS FÜR MINDESTENS EIN ZIELGERÄT MIT EINER ANORDNUNG ZUM KALIBRIEREN MINDESTENS EINER PUMPE**

(30) Priorität: 07.04.2022 AT 502262022
(71) Anmelder: Hagleitner, Hans Georg, 5700 Zell am See (AT)
(72) Erfinder: Hagleitner, Hans Georg, 5700 Zell am See (AT)
(74) Vertreter: Torggler & Hofmann Patentanwälte - Innsbruck

(57) **Zusammenfassung**

Dosiervorrichtung (32) zum Dosieren eines flüssigen Mediums für mindestens ein Zielgerät mit einer Anordnung zum Kalibrieren mindestens einer Pumpe (1) zum Fördern des flüssigen Mediums (9), wobei das flüssige Medium (9) mittels der mindestens einen Pumpe (1) aus mindestens einem Behälter (3) entnehmbar ist, umfassend mindestens einen Füllstandsensor, wobei mit dem mindestens einen Füllstandsensor ein Füllstand (7) des flüssigen Mediums (9) im mindestens einen Behälter (3) bestimmbar ist, wobei eine aus Messwerten des mindestens einen Füllstandsensors bestimmbare Volumendifferenz als Referenzvolumen zur Kalibrierung der mindestens einen Pumpe (1) verwendbar ist, wobei der mindestens eine Füllstandsensor als Laufzeitsensor (5), vorzugsweise als RADAR-Sensor, ausgeformt ist, besonders bevorzugt wobei nur ein einziger Laufzeitsensor (5) zur Bestimmung des Füllstands (7), insbesondere eines ersten Füllstands (7) und eines zweiten Füllstands (8), vorgesehen ist.

## Beschreibung

Die Erfindung betrifft eine Dosiervorrichtung zum Dosieren eines flüssigen Mediums für mindestens ein Zielgerät mit einer Anordnung zum Kalibrieren mindestens einer Pumpe zum Fördern des flüssigen Mediums, wobei das flüssige Medium mittels der mindestens einen Pumpe aus mindestens einem Behälter entnehmbar ist, umfassend mindestens einen Füllstandsensor, wobei mit dem mindestens einen Füllstandsensor ein Füllstand des flüssigen Mediums im mindestens einen Behälter bestimmbar ist, wobei eine aus Messwerten des mindestens einen Füllstandsensors bestimmbare Volumendifferenz als Referenzvolumen zur Kalibrierung der Pumpe verwendbar ist. Zudem betrifft die Erfindung ein Verfahren zum Kalibrieren mindestens einer Pumpe zum Fördern eines flüssigen Mediums.

Die Schrift DE 10 2017 114 665 A1 betrifft eine Kalibriervorrichtung. Die Kalibriervorrichtung weist eine erste Detektionsvorrichtung und eine zweite Detektionsvorrichtung auf, wobei die erste Detektionsvorrichtung einen oberen Füllstand und die zweite Detektionsvorrichtung einen unteren Füllstand eines flüssigen Mediums, insbesondere Wasser, in einem Behälter misst. Durch die Füllstanddifferenz wird ein Referenzvolumen definiert, welches für die Kalibrierung der Pumpe verwendbar ist. Die Detektionsvorrichten sind dabei als Elektroden ausgebildet, wobei Elektroden von oben in das flüssige Medium im Behälter ragen. Die Elektrode der ersten Detektionsvorrichtung ist dabei an einer oberen Höhe angeordnet und misst den oberen Füllstand. Die zweite Detektionsvorrichtung ist an einer unteren Höhe angeordnet und misst den unteren Füllstand.

Nachteilig an dem genannten Stand der Technik ist, dass das Referenzvolumen durch die Anordnung der Detektionsvorrichtung fixiert ist. Das Referenzvolumen kann so nur durch eine bauliche Veränderung der Detektionsvorrichtung verändert werden.

Ein großes Referenzvolumen lässt eine genauere Kalibrierung zu. Der Kalibriervorgang dauert aber länger. Ein kleines Referenzvolumen hat typischerweise eine ungenauere Kalibrierung zur Folge, dafür kann die Kalibrierung genauer durchgeführt werden. Somit ist eine leicht änderbares Referenzvolumen wünschenswert.

Zudem ist nachteilig, dass die Detektionsvorrichtung in direktem Kontakt mit dem flüssigen Medium steht. Insbesondere bei Leitfähigkeitssensoren bilden sich mit der Zeit Ablagerungen auf den Elektroden, sodass die Elektroden regelmäßig gereinigt werden müssen. Zudem ist die Detektionsvorrichtung möglicherweise aggressiven chemischen Mitteln ausgesetzt.

Die Erfindung hat sich zur Aufgabe gemacht, die oben genannten Nachteile zu vermeiden.

Es soll eine Dosiervorrichtung mit einer Anordnung zum Kalibrieren einer Pumpe geschaffen werden, bei welcher die Dauer und die Genauigkeit der Kalibrierung einfach anpassbar ist. Zudem soll die Dosiervorrichtung möglichst wartungsarm sein.

Diese Aufgabe wird durch die unabhängigen Ansprüche 1 und 11 gelöst.

Es ist erfindungsgemäß vorgesehen, dass der Füllstandsensor als Laufzeitsensor, vorzugsweise als RADAR-Sensor, ausgeformt ist.

Als Laufzeitsensor wird eine Vorrichtung bezeichnet, welche Signale, insbesondere elektromagnetische Wellen, aussendet und ein von der Oberfläche des zu messenden Mediums oder von einem mit dem Füllstand aufschwimmenden Reflexionsteils reflektiertes Echo empfängt. Insbesondere können hierfür RADAR-Sensoren, welche mit Mikrowellen arbeiten, verwendet werden. Auch denkbar sind aber beispielsweise Ultraschallsensoren.

Dadurch, dass der Füllstand des Mediums mittels eines Laufzeitsensors gemessen wird, kann ein beliebiger Füllstand gemessen werden. Insbesondere kann nicht nur das Überschreiten einer von der Anordnung des Füllstandsensors fest vorgegebenen Füllstandgrenze detektiert werden. Damit kann das Referenzvolumen zur Kalibrierung innerhalb der vom Behältervolumen gesetzten Grenzen frei gewählt werden.

Insbesondere kann für eine genaue Kalibrierung nahezu das gesamte Volumen des Behälters als Referenzvolumen gewählt werden. Ein solcher Kalibriervorgang kann auch über mehrere Dosiervorgänge andauern.

Alternativ oder zusätzlich kann auch eine Schnellkalibrierung von kürzerer Dauer ohne eine bauliche Änderung der Anordnung durchgeführt werden, welche dann üblicherweise ungenauer ist.

Dadurch, dass der Füllstand nahezu kontinuierlich messbar ist, kann auch die Kalibrierung nahezu kontinuierlich durchgeführt werden. Der Startpunkt und der Endpunkt der Kalibrierung ist ohne bauliche Veränderung frei wählbar.

Es kann beispielsweise vorgesehen sein, dass ein festes Kalibrierungsintervall zwischen Startpunkt und Endpunkt sich in der Zeit bewegt. So kann eine nahezu kontinuierliche Kalibrierung mit festem Kalibrierungsintervall und gleichbleibender Genauigkeit durchgeführt werden.

Es kann auch vorgesehen sein, dass der Startpunkt fest gewählt wird und die Kalibrierung, gegebenenfalls nach einer gewissen Einlaufzeit, kontinuierlich mit einem wachsenden Kalibrierungsintervall durchgeführt wird. Die Kalibrierung wird damit ohne große Einlaufzeit durchgeführt und im Laufe aufgrund des wachsenden Kalibrierungsintervalls immer genauer.

Aus den vorstehenden Verwendungsbeispielen wird deutlich, dass die Vorrichtung eine sehr flexible Kalibrierung ohne bauliche Veränderung zulässt.

In einem besonders bevorzugten Ausführungsbeispiel ist nur ein einziger Laufzeitsensor zur Bestimmung des Füllstands, insbesondere eines ersten Füllstands und eines zweiten Füllstands, vorgesehen. Es kann also ein oberer und ein unterer Füllstand und ganz generell ein beliebiger Füllstand mittels nur eines Sensors gemessen werden.

Vom Laufzeitsensor können Signale, bevorzugt elektromagnetische Wellen, besonders bevorzugt Mikrowellen, sendbar sein und/oder ein vom Medium oder von einem aufschwimmenden Reflexionsteil reflektiertes Echo detektierbar sein.

Insbesondere werden die Signale an der Oberfläche des Mediums reflektiert und dann vom Laufzeitsensor erfasst. Durch den Laufzeitunterschied kann der Sensor die Distanz der Oberfläche des Mediums zum Sensor messen. Damit kann ein beliebiger Füllstand des Behälters bestimmt werden.

Der Laufzeitsensor kann an einer Oberseite des mindestens einen Behälters angeordnet sein. Vorzugsweise sendet der Laufzeitsensor Signale in im Wesentlichen vertikale Richtung nach unten. So kann realisiert werden, dass das Echo zum Großteil wieder beim Laufzeitsensor ankommt.

Es kann weiterhin vorgesehen sein, dass der Laufzeitsensor außerhalb des mindestens einen Behälters angeordnet ist. Die Signale sind vom Laufzeitsensor vorzugsweise durch die Behälterwand in das Innere des mindestens einen Behälters sendbar. Ein Kontakt des Sensors mit dem Medium ist daher ausgeschlossen. Der Laufzeitsensor muss daher nicht regelmäßig gereinigt werden.

In einem besonders bevorzugten Ausführungsbeispiel ist der Laufzeitsensor in einer Andockeinheit angeordnet, wobei die Andockeinheit am mindestens einen Behälter, insbesondere an einer Öffnung des mindestens einen Behälters, lösbar befestigbar ist.

"In der Andockeinheit angeordnet" kann dabei bedeuten, dass der Laufzeitsensor eine Baueinheit mit der Andockeinheit bildet. Insbesondere kann der Laufzeitsensor in oder am Gehäuse der Andockeinheit angeordnet sein.

Damit muss der Füllstandsensor nicht in einem zusätzlichen Schritt am Behälter angeordnet werden, sondern kann zusammen mit der Andockeinheit am Behälter lösbar befestigt werden. Damit wird auch eine aufwändige Verkabelung vermieden. Zudem muss auf der Behälteroberfläche kein Platz für eine extra Messeinheit gefunden werden.

Bei sehr geringem Füllstand können Probleme entstehen, da der Laufzeitsensor dann das von der Oberfläche des Mediums reflektierte Echo und das vom Boden reflektierte Echo nicht mehr ausreichend unterscheiden kann.

Es kann daher ein Leerstandsensor in der Andockeinheit vorgesehen sein, welcher Luft im Flüssigkeitskanal der Andockeinheit detektiert. Dieser Leerstandsensor kann als optischer Sensor oder als ein Reed-Schalter und ein Schwimmer ausgeformt sein. Als optischer Sensor wird ein transluzenter Flüssigkeitskanal der Andockeinheit von Licht durchschienen und aufgrund des sich veränderten Brechungsverhaltens entschieden, ob Luft im Flüssigkeitskanal ist.

Die Andockeinheit kann mindestens ein Lesegerät zum berührungslosen Lesen eines Datenträgers aufweist. Insbesondere kann die Andockeinheit ein RFID-Lesegerät zum Auslesen eines RFID-Tags im Behälter oder im Einsatz im Behälter aufweisen. Damit können Daten über den Behälter ausgelesen werden. Zudem können Daten in den RFID-Tag im Behälter eingeschrieben werden.

Es kann zudem eine Linse für den mindestens einen Füllstandsensor vorgesehen sein, wobei die vom mindestens einen Füllstandsensor ausgesendeten Signale durch die Linse gesendet werden. Damit können die Signale beispielsweise fokussiert werden. Die Linse ist vorzugsweise an der Andockeinheit angeordnet.

Es ist vorzugsweise vorgesehen, dass das flüssige Medium durch die Andockeinheit mittels der mindestens einen Pumpe aus dem mindestens einen Behälter entnehmbar ist.

Die mindestens eine Pumpe kann als Schlauchquetschpumpe und/oder als Membranpumpe und/oder als Kolbenpumpe und/oder als Zahnradpumpe und/oder als Exzenterschneckenpumpe ausgebildet sein. Es ist aber auch jegliche andere Art von elektronisch steuerbaren Pumpen verwendbar.

In einem bevorzugten Ausführungsbeispiel weist die Anordnung mindestens eine Recheneinheit auf, wobei der mindestens eine Füllstandsensor und die mindestens eine Pumpe mit der mindestens einen Recheneinheit, beispielsweise mittels eines BUS-Systems, in Datenverbindung bringbar sind.

Der Füllstandsensor kann Daten, insbesondere Daten betreffend das Volumen im Behälter über die Datenverbindung an die Recheneinheit senden. Das Referenzvolumen kann in der Recheneinheit berechnet werden. Es kann aber auch vorgesehen sein, dass das Referenzvolumen bereits in einer dezentralen Logikeinheit, beispielsweise an einer Andockeinheit des mindestens einen Behälters oder in der Logik des Füllstandsensors selbst, berechnet wird und dann an die Recheneinheit übermittelt wird.

Besonders bevorzugt ist vorgesehen, dass die Recheneinheit als Steuereinheit zum Steuern der mindestens einen Pumpe ausgebildet ist. Mindestens ein Förderparameter kann daher von der Recheneinheit zum Steuern der mindestens einen Pumpe verwendet werden.

Es kann alternativ oder zusätzlich vorgesehen sein, dass die Pumpe eine dezentrale Steuereinheit aufweist und Daten mit mindestens einem Förderparameter an die Recheneinheit übermittelt.

Von der Recheneinheit kann ein theoretisches Fördervolumen der mindestens einen Pumpe mit dem Referenzvolumen vergleichbar sein.

Zudem oder alternativ kann von der Recheneinheit eine gespeicherte Förderformel zur Berechnung des theoretischen Fördervolumens basierend auf der Abweichung zwischen einem theoretischen Fördervolumen und dem Referenzvolumen anpassbar sein.

Es können Abweichungen in Bezug auf mehrere verschiedene Kalibrierungsintervalle zur Anpassung der Förderformel zugezogen, und beispielsweise gemittelt, werden.

Die Förderformel kann ebenso zur Steuerung der mindestens einen Pumpe verwendet werden, womit die Anpassung der Förderformel einer Kalibrierung der Pumpe entspricht. Mit einer angepassten Förderformel kann die mindestens eine Pumpe genauer gesteuert werden.

In einem bevorzugten Ausführungsbeispiel ist vom mindestens einen Füllstandsensor, vorzugsweise von einem einzigen Füllstandsensor, ein erster Füllstand des Mediums im mindestens einen Behälter zu einem Startzeitpunkt und ein zweiter Füllstand des Mediums im mindestens einen Behälter zu einem Endzeitpunkt messbar. Der Startzeitpunkt und der Endzeitpunkt definieren ein Kalibrierungsintervall.

Bevorzugt ist vorgesehen, dass das Referenzvolumen aus der Differenz des ersten Füllstands und des zweiten Füllstands ermittelbar ist.

Insbesondere kann unter Kenntnis der Form des Behälters, insbesondere der horizontalen Innenfläche des Behälters in Abhängigkeit von der Füllhöhe, aus einem Füllstand ein im Behälter befindliches Volumen errechnet werden.

Die Information über die Form des Behälters kann vorteilhafterweise auf einem Datenträger im Behälter, insbesondere einem RFID-Tag, abgespeichert sein. Mittels eines geeigneten Lesegeräts, welches besonders bevorzugt an einer Andockeinheit zum Anschließen des Behälters an einer Dosiervorrichtung angeordnet ist, kann diese Information über die Form des Behälters ausgelesen werden und an die Recheneinheit oder eine in der Andockeinheit befindliche Logikeinheit zur weiteren Verwendung weitergeleitet werden.

Ist das im Behälter befindliche Volumen bei dem ersten Füllstand und das im Behälter befindliche Volumen bei dem zweiten Füllstand, gegebenenfalls unter Verwendung der Information über die Form des Behälters, ermittelt, kann eine Volumendifferenz ausgerechnet werden.

Diese Volumendifferenz wird erfindungsgemäß als Referenzvolumen zur Kalibrierung der Pumpe verwendet, da davon ausgegangen werden kann, dass diese Volumendifferenz dem entnommenen, durch die Pumpe geförderten Volumen entspricht.

Bezüglich der Pumpe kann mindestens ein Förderparameter, vorzugsweise eine Anzahl an Pumpzyklen und/oder eine Förderzeit, der mindestens einen Pumpe, vorzugsweise von der Recheneinheit, speicherbar sein, wobei sich der mindestens eine Förderparameter auf das Kalibrierungsintervall bezieht. Mit der Anzahl der Pumpzyklen kann die Anzahl der Umdrehungen oder Hübe der mindestens einen Pumpe gemeint sein.

Es kann der mindestens eine Förderparameter zum oder und nach oder zum Endzeitpunkt des Kalibrierungsintervalls ausgelesen werden, vorzugsweise wobei der Endzeitpunkt unabhängig von der baulichen Anordnung des mindestens einen Füllstandsensors gewählt wird. Der Förderparameter kann dann abgespeichert werden.

Alternativ kann der mindestens eine Förderparameter zum oder vor dem Startzeitpunkt des Kalibrierungsintervalls festgelegt werden, wobei in diesem Fall die Pumpe auf Basis der Förderparameter gesteuert wird.

Alternativ oder zusätzlich kann eine Zeit als Förderparameter gespeichert werden, beispielsweise wenn bekannt ist, dass die Pumpe mit konstanter und bekannter Drehzahl betreibbar ist.

In einem Ausführungsbeispiel ist ein theoretisches Fördervolumen der mindestens einen Pumpe im Kalibrierungsintervall aus dem mindestens einen Förderparametern über eine gespeicherte Förderformel, vorzugsweise von der Recheneinheit, errechenbar.

Die Förderformel definiert hierbei einen Zusammenhang zwischen dem mindestens einen Förderparameter der mindestens einen Pumpe und eine theoretisch geschätzten Fördervolumen. Bei der Kalibrierung gilt es, diese Förderformel anzupassen, sodass das theoretisch geschätzte Fördervolumen dem Referenzvolumen möglichst exakt entspricht. Wird die Förderformel im weiteren Verlauf zu Steuerung der Pumpe verwendet, kann die Förderleistung der Pumpe genau eingestellt werden.

Beispielsweise kann die Förderformel zur Berechnung des theoretischen Volumens ein Produkt aus der Anzahl der Pumpzyklen und einem Kalibrierwert umfassen. Zur Anpassung der Förderformel kann der Kalibrierwert angepasst werden.

Es kann vorgesehen sein, dass die Förderformel nur bei einer Abweichung über einem Grenzwert angepasst wird. Insbesondere kann eine Abweichung über einem Grenzwert dann eintreten, wenn der Kalibrierwert einen Grenzwert überschreitet. Bevorzugt wird aber sofort nachgeregelt.

Bei einer Abweichung über einem Warngrenzwert kann eine Warnung an den Benutzer ausgegeben werden, vorzugsweise über ein Display oder über ein mit der Anordnung in Datenverbindung stehendes mobiles Endgerät. Zum Beispiel kann ein Benutzer zum Schlauchtausch aufgefordert werden.

Der Warngrenzwert kann dem Grenzwert für eine Anpassung der Förderformel entsprechen, wobei in diesem Fall der Benutzer einen Kalibriervorgang manuell starten soll. Dies kann dem Benutzer in einer Handlungsaufforderung mitgeteilt werden.

Alternativ kann der Grenzwert zur Anpassung niedriger angelegt sein als der Warngrenzwert, wobei die Anordnung eine automatische Kalibrierung bei einer Abweichung über dem Grenzwert zur Anpassung ausführt. Der Warngrenzwert wird hier nur überschritten, wenn die automatische Kalibrierung nicht funktioniert, beispielsweise wenn ein Defekt oder zu großer Verschleiß vorliegt.

Es kann eine Initialkalibrierung nach der Installation oder einer Wartung angewendet werden oder, zusätzlich oder alternativ, eine Nachkalibrierung während dem Betrieb angewendet werden.

Bei der Initialkalibrierung startet man mit etwas Überdosierung und kann nach einer gewissen verbrauchten Menge (bestimmte Füllstandänderung) die erste Kalibrierung durchführen.

In einem besonders bevorzugten Ausführungsbeispiel wird die Kalibrierung laufend durchgeführt, wobei hierzu der Füllstand im Behälter laufend gemessen wird. Das wird insbesondere durch die Verwendung eines Laufzeitsensors zur Füllstandmessung ermöglicht.

Die Dosiervorrichtung ist insbesondere dazu ausgebildet, dass der Füllstand im Behälter laufend vom Laufzeitsensor messbar ist. Außerdem kann die Dosiervorrichtung dazu ausgebildet sein, dass die Kalibrierung laufend durchführbar ist. Außerdem kann die Dosiervorrichtung dazu ausgebildet sein, dass für die Kalibrierung die Messkurve des Füllstands mit der Sollkurve des geförderten Volumens vergleichbar ist.

Durch die kontinuierliche Messung kann eine Messkurve des Füllstands aufgezeichnet werden.

Es kann vorgesehen sein, dass für die Kalibrierung die Messkurve des Füllstands mit der theoretisch errechneten Sollkurve des geförderten Volumens vergleichbar ist und verglichen wird.

Eine bevorzugte Dosiervorrichtung kann ein flüssiges Medium mit der mindestens einen Pumpe aus dem mindestens einen Behälter in die Richtung mindestens eines Zielgeräts, insbesondere mindestens eine Waschmaschine oder mindestens eines Geschirrspülers, fördern.

In einem Ausführungsbeispiel der Dosiervorrichtung ist die Recheneinheit als Zentralsteuereinheit zum Steuern der Dosiervorrichtung ausgebildet. Diese kann die Pumpe steuern und/oder steht mit den Zielgeräten in Verbindung. Insbesondere kann ein Display vorgesehen sein, mittels welchen ein Benutzer die Steuerung konfigurieren kann. Die Zentralsteuereinheit kann zudem Daten aus einer Andockeinheit, insbesondere von einem RFID-Lesegerät zum Lesen eines RFID-Tags im Behälter, von dem Füllstandsensor und/oder von einem Leerstandsensor empfangen und weiterverarbeiten.

In einem weiteren Ausführungsbeispiel können mindestens zwei Behälter und mindestens zwei Pumpen und jeweils eine Pumpe pro Behälter vorgesehen sein.

Bevorzugt ist dabei vorgesehen, dass das flüssige Medium mittels der Pumpen in einen Einspülverteiler förderbar ist, besonders bevorzugt wobei das flüssige Medium vom Einspülverteiler über ein Spülmedium, insbesondere Wasser, weiter zum mindestens einen Zielgerät förderbar ist.

Ein erfindungsgemäßes Verfahren zum Kalibrieren mindestens einer Pumpe zum Fördern eines flüssigen Mediums, insbesondere ausgeführt durch eine beschriebene Dosiervorrichtung sieht vor, dass das flüssige Medium mittels der mindestens einen Pumpe aus mindestens einem Behälter entnehmbar ist, und weist die folgenden Verfahrensschritte auf:
- es wird mit mindestens einem Füllstandsensor ein Füllstand des flüssigen Mediums im mindestens einen Behälter bestimmt, wobei der Füllstandsensor als Laufzeitsensor ausgebildet ist,
- es wird aus Messwerten des mindestens einen Füllstandsensors eine Volumendifferenz der Flüssigkeit im mindestens einen Behälter bestimmt,
- es wird mindestens eine Pumpe unter Verwendung der Volumendifferenz als Referenzvolumen kalibriert.

Bevorzugt ist weiterhin vorgesehen:
- es wird ein erster Füllstand des Mediums im mindestens einen Behälter zu einem Startzeitpunkt und ein zweiter Füllstand des Mediums im mindestens einen Behälter zu einem Endzeitpunkt mittels eines Füllstandsensors gemessen,
- das Referenzvolumen wird aus dem ersten Füllstand und dem zweiten Füllstand ermittelt.

Es kann vorgesehen sein, dass der erste Zeitpunkt und/oder der zweite Zeitpunkt unabhängig von der baulichen Anordnung des Füllstandsensors gewählt wird. Dies wird insbesondere über die Ausbildung des Füllstandsensors als Laufzeitsensor erreicht.

In einem bevorzugten Ausführungsbeispiel des Verfahrens ist zusätzlich einer der folgenden Verfahrensschritte vorgesehen:
- es wird mindestens ein Förderparameter, vorzugsweise eine Anzahl an Pumpzyklen und/oder eine Förderzeit, der mindestens einen Pumpe für das Kalibrierungsintervall zwischen dem Startzeitpunkt und dem Endzeitpunkt gespeichert,
- es wird ein theoretisches Fördervolumen in dem Kalibrierungsintervall aus dem mindestens einen Förderparameter über eine Förderformel errechnet,
- es wird das theoretische Fördervolumen mit dem Referenzvolumen verglichen,
- es wird die Förderformel zur Berechnung des theoretischen Fördervolumens basierend auf der Abweichung zwischen theoretischem Fördervolumen und Referenzvolumen angepasst.

Weitere optionale Verfahrensschritte sind den Ansprüchen zu entnehmen.

Weitere Ausführungsbeispiele werden in den Figuren beschrieben. Dabei zeigen:
- Fig. 1a: Dosiervorrichtung mit einer Pumpe, einem Behälter und einer Andockeinheit
- Fig. 1b: Dosiervorrichtung mit mehreren Pumpen, Behältern und Andockeinheiten
- Fig. 2: Andockeinheit in einer schematischen Schnittdarstellung
- Fig. 3a: Einsatz für einen Behälter in einer schematischen Schnittdarstellung
- Fig. 3b: Behälter mit einem Einsatz in einer schematischen Schnittdarstellung
- Fig. 3c: Behälter mit einem alternativen Ausführungsbeispiel eines Einsatzes in einer schematischen Schnittdarstellung
- Fig. 4: Behälter mit einer Andockeinheit und einem Einsatz in einer schematischen Schnittdarstellung.

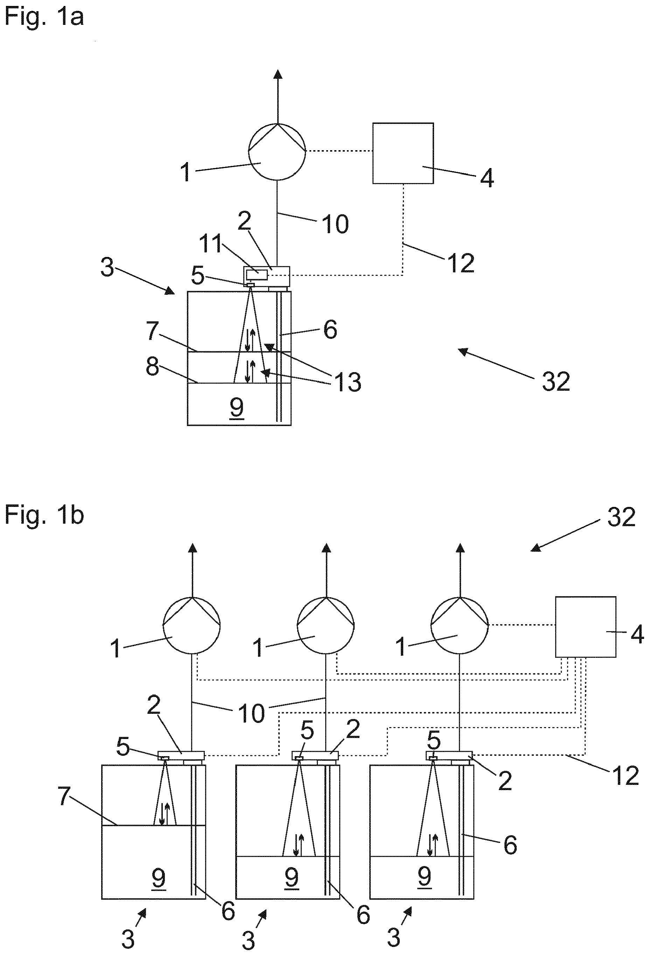

Die Fig. 1a zeigt eine Dosiervorrichtung 32 zum Dosieren eines flüssigen Mediums 9, welches sich in einem Behälter 3 befindet. Das flüssige Medium 9 kann durch eine Andockeinheit 2, welche an einer Öffnung des Behälters 3 lösbar befestigt ist, mittels einer Pumpe 1 angesaugt werden. Das flüssige Medium 9 kann von der Pumpe 1 weiter in die Richtung eines Zielgeräts, insbesondere einer Waschmaschine oder eines Geschirrspülers, gefördert werden (Pfeile in den Figuren 1a und 1b). Es kann dabei vorgesehen sein, dass das flüssige Medium 9 mittels der Pumpe nicht direkt bis zum Zielgerät gefördert wird. Dagegen kann vor dem Spülgerät ein Einspülverteiler vorgesehen sein, in welchem verschiedene Medien 9 vermischt und mittels eines Spülmediums weiter an ein Zielgerät gefördert werden.

Sowohl die Pumpe 1 als auch die Andockeinheit 2 sind über eine Datenleitung mit einer Zentralsteuereinheit 4 verbunden. Die Zentralsteuereinheit 4 kann die gesamte Dosiervorrichtung 32 steuern und dient als zentrale Recheneinheit für die Dosiervorrichtung 32. Dazu steht die Zentralsteuereinheit 4 über Datenleitungen 12 in Datenverbindung mit der Pumpe 1 und der Andockeinheit 2.

Die Andockeinheit 2 weist einen Laufzeitsensor 5, insbesondere einen RADAR-Sensor, auf. Der Laufzeitsensor 5 kann Signale 13 aussenden, wobei die Signale 13 unter anderem von der Oberfläche des sich im Behälter 3 befindlichen flüssigen Mediums 9 reflektiert werden. Das reflektierte Echo kann vom Laufzeitsensor 5 empfangen werden.

Damit kann der Abstand zwischen dem Laufzeitsensor 5 und der Oberfläche des flüssigen Mediums 9 bestimmt werden. Aus dieser Information kann der Füllstand 7 des Behälters 3 bestimmt werden. Insbesondere ist eine kontinuierliche Füllstandmessung möglich.

In der Fig. 1a sind insbesondere zwei verschiedene Füllstände 7 und 8 eingezeichnet, ein erster, oberer Füllstand 7 und ein zweiter, unterer Füllstand 8. Damit kann unter Zunahme von Informationen über den Behälter 3 eine Volumendifferenz zwischen dem ersten und dem zweiten Füllstand bestimmt werden. Diese Volumendifferenz kann als Referenzvolumen zum Kalibrieren der Pumpe 1 verwendet werden. Vorzugsweise findet die Berechnung zur Kalibrierung in der Zentralsteuereinheit 4 statt.

Da der Laufzeitsensor 5 beliebige Füllstände 7 messen kann, kann das Referenzvolumen beliebig gewählt werden. Dadurch sind eine nahezu kontinuierliche Füllstandmessung und auch eine nahezu kontinuierliche Kalibrierung möglich.

In der Andockeinheit 2 ist weiterhin eine Logikeinheit 11 angeordnet, welche unter anderem die Daten des Laufzeitsensors 5 weiterleitet.

Die Fig. 1b zeigt eine Dosiervorrichtung 32 mit mehreren Behältern 3, welche unterschiedliche flüssige Medien 9 enthalten können. Auf jedem Behälter 3 ist eine eigene Andockeinheit 2 mit Laufzeitsensor 5 angeordnet, wobei jede Andockeinheit 2 über eine Ableitung 10 in kommunikativer Verbindung mit einer Pumpe 1 steht.

Alle Andockeinheiten 2 und alle Pumpen 1 sind mit einer Zentralsteuereinheit 4 über Datenleitungen 12 verbunden.

Zu den Figuren 1a und 1b sei angemerkt, dass die Datenleitungen 12 auch kabellos über Funk ausgebildet sein können.

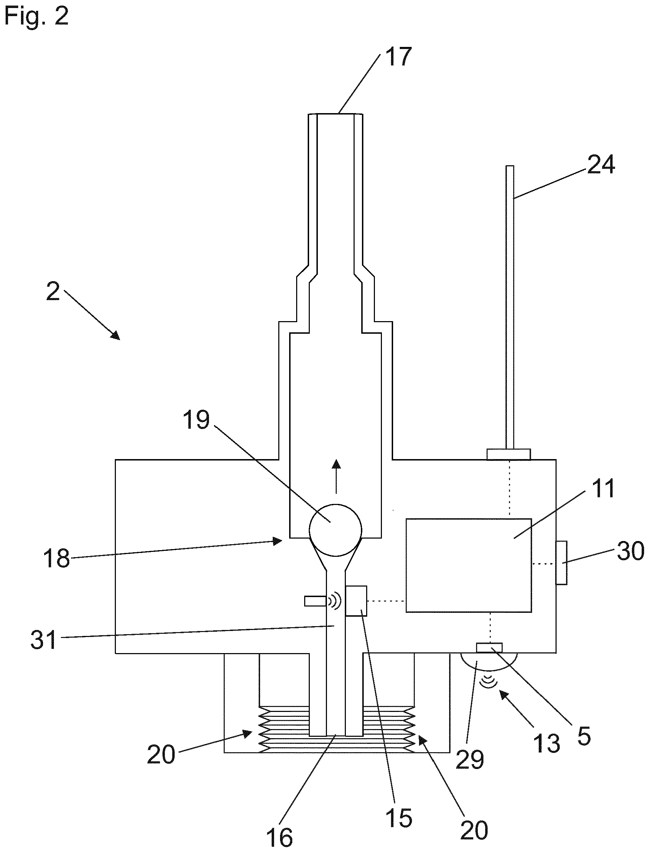

Die Fig. 2 zeigt ein Ausführungsbeispiel einer Andockeinheit 2 in einer schematischen Schnittdarstellung.

An der Oberseite der Andockeinheit 2 ist ein Flüssigkeitsauslass 17 vorgesehen, welcher zum Anschluss eines Schlauchs als Ableitung 10 geeignet ist.

Aus der Schnittdarstellung ist auch der Flüssigkeitseinlass 16 ersichtlich, über welchen ein flüssiges Medium 9 in die Andockeinheit 2 gelangen kann. Der Flüssigkeitseinlass 16 ist an einem Fortsatz an der Unterseite der Andockeinheit 2 ausgebildet, sodass der Flüssigkeitseinlass in einen Einsatz 22 und/oder einen Behälter 3 eingeführt werden kann.

An den Flüssigkeitseinlass 16 schließt ein Flüssigkeitskanal 31 an, welcher den Flüssigkeitseinlass 16 mit dem Flüssigkeitsauslass 17 verbindet. Im Flüssigkeitskanal 31 ist ein Rückschlagventil 18 angeordnet. Das Rückschlagventil 18 weist eine dichtende Kugel 19 auf. Die Kugel 19 kann mittels einer Feder (nicht dargestellt) oder durch die Schwerkraft dichtend an einen sich verjüngenden Teil des Flüssigkeitskanals 31 anliegen. Wird mittels der Pumpe 1 ein Unterdruck angelegt, hebt sich die Kugel 19 und Flüssigkeit kann durch den Flüssigkeitskanal 31 fließen. Alternativ kann das Rückschlagventil 18 mechanisch beim Andocken aufgedrückt werden.

Weiterhin ersichtlich ist der Laufzeitsensor 5, welcher an einer Unterseite der Andockeinheit 2 angeordnet ist. Im befestigten Zustand der Andockeinheit 2 kann der Laufzeitsensor 5 so Signale 13 durch die Behälterwand in das Innere des Behälters 3 senden. Im Signalweg kann eine Linse 29 angeordnet sein, wobei die Linse 29 nicht zwingend für die Funktion erforderlich ist.

Auch vorgesehen ist ein Leerstandsensor 15, welcher einen Leerstand im Behälter 3 messen kann. Insbesondere kann der Leerstandsensor 15 Luft im angesaugten flüssigen Medium 9 detektieren. Die Luft gelangt in das flüssige Medium, wenn der Behälter 3 fast leer ist.

In dieser Ausführungsform der Andockeinheit 2 ist der Leerstandsensor 15 als optischer Sensor ausgebildet. Insbesondere wird ein transluzenter Abschnitt des Flüssigkeitskanals 31 von einer Seite mittels einer Lichtquelle von Licht durchschienen. Auf der gegenüberliegenden Seite des Flüssigkeitskanals ist ein Sensor angebracht, welcher das Licht detektieren kann. Durch die Luft im flüssigen Medium ändert sich das Brechungsverhalten des Lichts, sodass das Vorhandensein von Luft detektiert werden kann.

In der Andockeinheit 2 ist zudem eine die Logikeinheit 11 schematisch eingezeichnet. Diese steht in Datenverbindung mit dem Laufzeitsensor 5 und dem Leerstandsensor 15. Die Logikeinheit 11 kann weiterhin in Datenverbindung mit einem Lesegerät zum Lesen von RFID-Daten aus einem im Behälter 3 oder im Einsatz 22 befindlichen RFID-Tag stehen, wobei das Lesegerät nicht eingezeichnet ist.

Die Daten können an eine Antenne 24 zum drahtlosen Übertragen von Daten und/oder einen Datenanschluss 30 zum Anschluss eines Kabels zum kabelgebundenen Übertragen von Daten weitergeleitet werden. Über die genannten Schnittstellen kann die Andockeinheit mit anderen Einheiten kommunizieren. Insbesondere kann die Andockeinheit 2 so mit einer Zentralsteuereinheit 4 verbunden werden.

Zum lösbaren Befestigen der Andockeinheit 2 an einem Behälter 3 und/oder einem Einsatz 22 ist ein Gegengewinde 20 an der Unterseite der Andockeinheit vorgesehen. Beispielsweise kann das Gegengewinde 20 zum Eingriff in ein Behälterverschlussgewinde 21 ausgebildet sein.

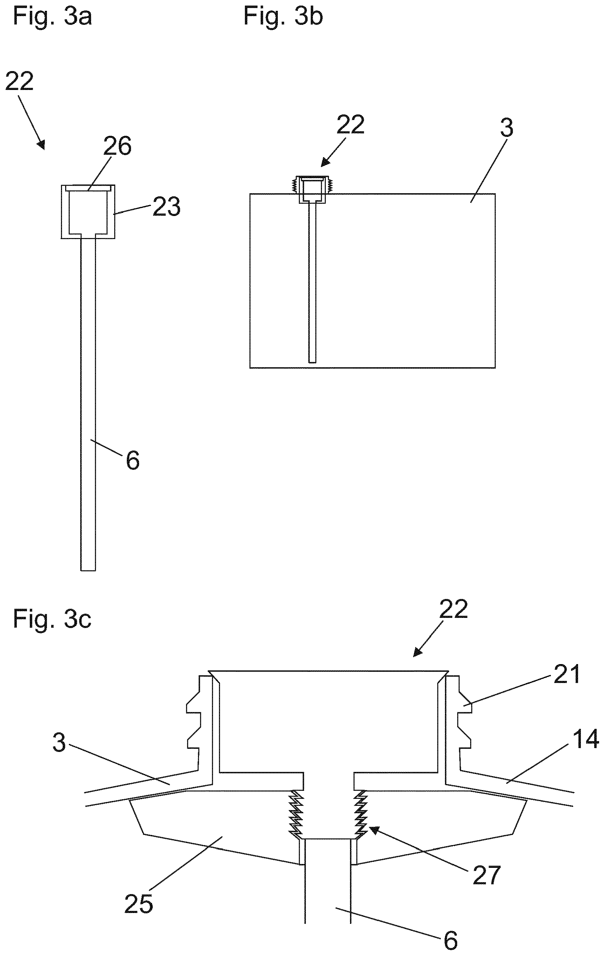

Die Fig. 3a zeigt einen Einsatz 22 in einer schematischen Schnittdarstellung. Die Fig. 3b zeigt einem in einen Behälter 3 lösbar befestigten Einsatz 22.

Der Einsatz 22 weist ein Saugrohr 6 und einen Befestigungsteil 23 auf. Mit dem Befestigungsteil 23 kann der Einsatz 22 in einer Behälteröffnung, vorzugsweise durch Einpressen, lösbar befestigt werden. Dadurch, dass der Einsatz 22 lösbar im Behälter 3 befestigt ist, kann der Behälter 3 nach der Verwendung vom Einsatz 22 getrennt recycelt oder wiederverwendet werden.

Am Befestigungsteil 23 ist zudem eine Dichtung 26 angeordnet, welche den Einsatz 22 gegenüber einer eingesetzten Andockeinheit 2 abdichten kann.

Mittels des Saugrohrs 6, welches bevorzugt aus einem weicheren Material als das Befestigungsteil 23 gefertigt ist, kann das flüssige Medium 9 aus dem Behälter 3 gesaugt werden.

In der Fig. 3b ist ersichtlich, dass der Einsatz 22 in die Behälteröffnung eingebracht wird und dort vorzugsweise eingepresst wird.

Am Einsatz 22 kann ein Datenträger, insbesondere ein RFID-Tag, angeordnet sein, welcher mittels eines an der Andockeinheit 2 angeordneten Lesegeräts ausgelesen werden kann.

Die Fig. 3c zeigt ein alternatives Ausführungsbeispiel eines Einsatzes 22. In diesem Ausführungsbeispiel ist der Einsatz 33 mit einem Rasthaken 25 verbindbar. Der Rasthaken 25 ist ein zusätzliches Bauteil, welches an der Innenseite des Behälters 3 anlegbar ist. Insbesondere kann der Rasthaken 25 so ausgebildet sein, dass er längs durch die Behälteröffnung in den Behälter 3 einbringbar ist und quer die Behälteröffnung überbrücken kann. So kann sich der Rasthaken 25 gegen die Innenseite des Behälters 3 stemmen und den Einsatz 22 in der Öffnung des Behälters 3 halten.

Die Verbindung zwischen dem Einsatz 22 und dem Rasthaken 25 erfolgt vorzugsweise mittels Verrasten mit einer Rastvorrichtung 27, es sind aber auch andere Verbindungen möglich. Eine Rastvorrichtung 27 kann mehrere Rastzähne aufweisen.

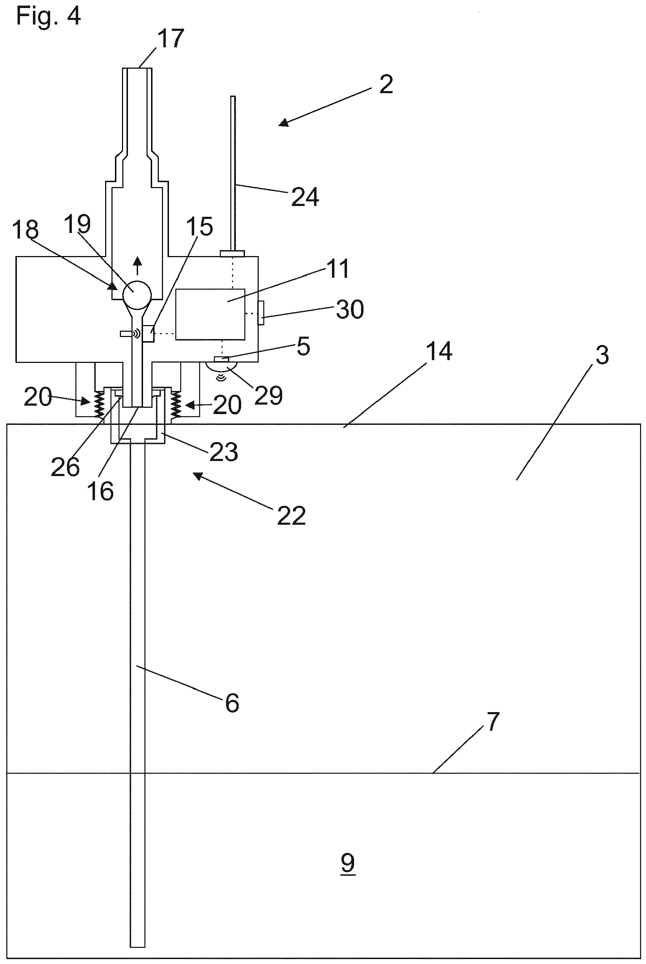

Die Fig. 4 zeigt einen Behälter 3 mit einem Einsatz 22, welcher in der Behälteröffnung befestigt ist, und einer Andockeinheit 2, welche im Einsatz 22 und am Behälter 3 lösbar befestigt ist.

Die Andockeinheit 2 kann mittels eines an der Andockeinheit 2 angeordneten Gegengewindes 20 am Behälterverschlussgewinde 21 des Behälters 3 durch Drehung oder durch Verhaken lösbar befestig werden.

Der Flüssigkeitseinlass 16 wird dadurch in kommunikative Verbindung mit dem Inneren des Einsatzes 22 und dem Saugrohr 6 gebracht, sodass flüssiges Medium 9 aus dem Behälter 3 in die Andockeinheit 2 gesaugt werden kann. Eine Dichtung 26, welche als Dichtlippe ausgeformt sein kann, dichtet die Andockeinheit gegenüber dem Einsatz 22 ab, insbesondere wird der Fortsatz der Andockeinheit, an welchem der Flüssigkeitseinlass 16 angeordnet ist, gegenüber dem Einsatz 22 abgedichtet.

Im befestigten Zustand der Andockeinheit 2 ist der Laufzeitsensor 5 zur Messung des Füllstands nach unten zum Behälter 3 hin ausgerichtet. Die Signale 13 des Laufzeitsensors 5 werden durch die obere Behälterwand 14 in das Innere des Behälters 3 gesendet. Das vom flüssigen Medium 9, insbesondere der Oberfläche des flüssigen Mediums 9 bei bestimmten Füllstand 7, reflektierte Echo geht ebenfalls durch die Behälterwand 14 und wird vom Laufzeitsensor 5 detektiert.

Durch die Messung der Laufzeit kann der Füllstand 7 im Behälter 3 bestimmt werden. Bei sehr niedrigem Füllstand 7 ist der Laufzeitsensor 5 nicht mehr zuverlässig. Daher kann mittels des zusätzlichen Leerstandsensors 15 detektiert werden, ob sich Luft durch das Saugrohr 6 angesaugt wird.

### Bezugszeichenliste:

- 1: Pumpe
- 2: Andockeinheit
- 3: Behälter
- 4: Zentralsteuereinheit
- 5: Laufzeitsensor
- 6: Saugrohr
- 7: Füllstand
- 8: Zweiter Füllstand
- 9: Flüssiges Medium
- 10: Ableitung
- 11: Logikeinheit
- 12: Datenleitung
- 13: Signal
- 14: Behälterwand
- 15: Leerstandsensor
- 16: Flüssigkeitseinlass
- 17: Flüssigkeitsauslass
- 18: Rückschlagventil
- 19: Kugel
- 20: Gegengewinde
- 21: Behälterverschlussgewinde
- 22: Einsatz
- 23: Befestigungsteil
- 24: Antenne
- 25: Rasthaken
- 26: Dichtung
- 27: Rastvorrichtung
- 29: Linse
- 30: Datenanschluss
- 31: Flüssigkeitskanal
- 32: Dosiervorrichtung

## Patentansprüche

1. Dosiervorrichtung (32) zum Dosieren eines flüssigen Mediums für mindestens ein Zielgerät mit einer Anordnung zum Kalibrieren mindestens einer Pumpe (1) zum Fördern des flüssigen Mediums (9), wobei das flüssige Medium (9) mittels der mindestens einen Pumpe (1) aus mindestens einem Behälter (3) entnehmbar ist, umfassend mindestens einen Füllstandsensor, wobei mit dem mindestens einen Füllstandsensor ein Füllstand (7) des flüssigen Mediums (9) im mindestens einen Behälter (3) bestimmbar ist, wobei eine aus Messwerten des mindestens einen Füllstandsensors bestimmbare Volumendifferenz als Referenzvolumen zur Kalibrierung der mindestens einen Pumpe (1) verwendbar ist, **dadurch gekennzeichnet, dass** der mindestens eine Füllstandsensor als Laufzeitsensor (5), vorzugsweise als RADAR-Sensor, ausgeformt ist, besonders bevorzugt wobei nur ein einziger Laufzeitsensor (5) zur Bestimmung des Füllstands (7), insbesondere eines ersten Füllstands (7) und eines zweiten Füllstands (8), vorgesehen ist.

2. Dosiervorrichtung (32) nach dem vorhergehenden Anspruch, wobei
- vom Laufzeitsensor (5) Signale (13), bevorzugt elektromagnetische Wellen, besonders bevorzugt Mikrowellen, sendbar sind und/oder wobei ein vom Medium (9) reflektiertes Echo detektierbar ist, und/oder
- wobei der Laufzeitsensor (5) an einer Oberseite des mindestens einen Behälters (3) angeordnet ist, vorzugsweise wobei vom Laufzeitsensor (5) Signale (13) in im Wesentlichen vertikale Richtung nach unten sendbar sind, und/oder
- wobei der Laufzeitsensor (5) außerhalb des mindestens einen Behälters (3) angeordnet ist, vorzugsweise wobei vom Laufzeitsensor (5) Signale (13) durch die Behälterwand (14) in das Innere des mindestens einen Behälters (3) sendbar sind.

3. Dosiervorrichtung (32) nach einem der vorhergehenden Ansprüche, wobei der Laufzeitsensor (5) in einer Andockeinheit (2) angeordnet ist, wobei die Andockeinheit (2) am mindestens einen Behälter (3), insbesondere an einer Öffnung des mindestens einen Behälters (3), lösbar befestigbar ist, wobei das flüssige Medium (9) durch die Andockeinheit (2) mittels der mindestens einen Pumpe (1) aus dem mindestens einen Behälter (3) entnehmbar ist, vorzugsweise wobei die Andockeinheit (2)
- mindestens einen Leerstandsensor (15) zur Detektion von Luft im Flüssigkeitskanal (31) der Andockeinheit (2) aufweist, wobei der mindestens eine Leerstandsensor (15) insbesondere als optischer Sensor und/oder einen Schwimmer, und/oder
- mindestens ein Lesegerät zum berührungslosen Lesen eines, insbesondere am Behälter (3) oder an einem Einsatz im Behälter (3) angeordneten, Datenträgers aufweist.

4. Dosiervorrichtung (32) nach einem der vorhergehenden Ansprüche, wobei mindestens eine Linse (29) für den mindestens einen Laufzeitsensor (5) vorgesehen ist, wobei die vom mindestens einen Laufzeitsensor (5) ausgesendeten Signale (13) durch die Linse (29) gesendet werden.

5. Dosiervorrichtung (32) nach einem der vorhergehenden Ansprüche, wobei die mindestens eine Pumpe (1) als Schlauchquetschpumpe und/oder als Membranpumpe und/oder als Kolbenpumpe und/oder als Zahnradpumpe und/oder als Exzenterschneckenpumpe ausgebildet ist.

6. Dosiervorrichtung (32) nach einem der vorhergehenden Ansprüche, wobei mindestens eine Recheneinheit vorgesehen ist, wobei der mindestens eine Laufzeitsensor (5) und die mindestens eine Pumpe (1) mit der mindestens einen Recheneinheit, beispielsweise mittels eines BUS-Systems, in Datenverbindung bringbar sind, vorzugsweise wobei
- die Recheneinheit als Steuereinheit zum Steuern der mindestens einen Pumpe (1) ausgebildet ist, besonders bevorzugt wobei die Recheneinheit als Zentralsteuereinheit (4) zum Steuern der Dosiervorrichtung (32) fungiert, und/oder
- von der Recheneinheit ein theoretisches Fördervolumen der mindestens einen Pumpe (1) mit dem Referenzvolumen vergleichbar ist, und/oder
- von der Recheneinheit eine gespeicherte Förderformel zur Berechnung des theoretischen Fördervolumens basierend auf der Abweichung zwischen einem theoretischen Fördervolumen der mindestens einen Pumpe (1) und dem Referenzvolumen anpassbar ist.

7. Dosiervorrichtung (32) nach einem der vorhergehenden Ansprüche, wobei vom mindestens einen Laufzeitsensor (5), vorzugsweise von einem einzigen Laufzeitsensor (5), ein erster Füllstand (7) des Mediums (9) im mindestens einen Behälter zu einem Startzeitpunkt und ein zweiter Füllstand (8) des Mediums (9) im mindestens einen Behälter (3) zu einem Endzeitpunkt messbar sind, besonders bevorzugt wobei das Referenzvolumen aus der Differenz des ersten Füllstands (7) und des zweiten Füllstands (8) ermittelbar ist.

8. Dosiervorrichtung (32) nach einem der vorhergehenden Ansprüche, wobei mindestens ein Förderparameter, insbesondere eine Anzahl an Pumpzyklen und/oder eine Förderzeit, der mindestens einen Pumpe (1), insbesondere von der Recheneinheit, speicherbar ist, wobei sich der mindestens eine Förderparameter auf das Kalibrierungsintervall bezieht, vorzugsweise wobei ein theoretisches Fördervolumen der mindestens einen Pumpe (1) im Kalibrierungsintervall aus dem mindestens einen Förderparametern über eine gespeicherte Förderformel, insbesondere von der Recheneinheit, errechenbar ist.

9. Dosiervorrichtung nach einem der vorhergehenden Ansprüche, wobei der Füllstand (7) im Behälter (3) laufend messbar ist, vorzugsweise wobei
- die Kalibrierung laufend durchführbar ist, und/oder
- für die Kalibrierung die Messkurve des Füllstands mit der Sollkurve des geförderten Volumens vergleichbar ist.

10. Dosiervorrichtung (32) nach einem der vorhergehenden Ansprüche, wobei ein flüssiges Medium (9) mit der mindestens einen Pumpe (1) aus dem mindestens einen Behälter (3) in die Richtung mindestens eines Zielgeräts, insbesondere mindestens einer Waschmaschine oder mindestens eines Geschirrspülers, förderbar ist, vorzugsweise wobei mindestens zwei Behälter (3) und mindestens zwei Pumpen (1) vorgesehen sind und jeweils eine Pumpe (1) pro Behälter (3) vorgesehen ist, besonders bevorzugt wobei das flüssige Medium (9) mittels der Pumpen (1) in einen Einspülverteiler förderbar ist und vom Einspülverteiler über ein Spülmedium, insbesondere Wasser, weiter zum mindestens einen Zielgerät förderbar ist.

11. Verfahren zum Kalibrieren mindestens einer Pumpe (1) zum Fördern eines flüssigen Mediums (9), insbesondere ausgeführt durch eine Dosiervorrichtung (32) nach einem der vorhergehenden Ansprüche, wobei das flüssige Medium (9) mittels der mindestens einen Pumpe (1) aus mindestens einem Behälter (3) entnehmbar ist, mit den folgenden Verfahrensschritten:
- es wird mit mindestens einem Füllstandsensor ein Füllstand (7) des flüssigen Mediums (9) im mindestens einen Behälter (3) bestimmt, wobei der Füllstandsensor als Laufzeitsensor ausgebildet (5) ist,
- es wird aus Messwerten des mindestens einen Füllstandsensors eine Volumendifferenz des flüssigen Mediums (9) im mindestens einen Behälter (3) bestimmt,
- es wird mindestens eine Pumpe (1) unter Verwendung der Volumendifferenz als Referenzvolumen kalibriert.

12. Verfahren nach dem vorhergehenden Anspruch, mit den folgenden Verfahrensschritten:
- es wird ein erster Füllstand (7) des Mediums im mindestens einen Behälter (3) und ein zweiter Füllstand (8) des Mediums im mindestens einen Behälter (3) mittels eines Füllstandsensors gemessen,
- das Referenzvolumen wird aus dem ersten Füllstand (7) und dem zweiten Füllstand (8) ermittelt.

13. Verfahren nach Anspruch 11 oder 12, wobei zusätzlich mindestens einer der folgenden Verfahrensschritte vorgesehen ist:
- es wird mindestens ein Förderparameter, vorzugsweise eine Anzahl an Pumpzyklen und/oder eine Förderzeit, der mindestens einen Pumpe (1) für das Kalibrierungsintervall gespeichert,
- es wird ein theoretisches Fördervolumen in dem Kalibrierungsintervall aus dem mindestens einen Förderparameter über eine Förderformel errechnet,
- es wird das theoretische Fördervolumen mit dem Referenzvolumen verglichen,
- es wird die Förderformel zur Berechnung des theoretischen Fördervolumens basierend auf der Abweichung zwischen theoretischem Fördervolumen und Referenzvolumen angepasst,
vorzugsweise wobei der mindestens eine Förderparameter
- zu oder vor einem Startzeitpunkt der Kalibrierung festgelegt wird, und/oder
- zu oder und nach einem Endzeitpunkt der Kalibrierung ausgelesen wird, vorzugsweisen wobei der Endzeitpunkt unabhängig von der baulichen Anordnung des mindestens einen Füllstandsensors gewählt wird.

14. Verfahren nach einem der Ansprüche 11 bis 13, wobei
- bei einer Abweichung über einem Warngrenzwert eine Warnung an den Benutzer, beispielsweise an auf einem Display, ausgegeben wird, und/oder
- die Förderformel zur Berechnung des theoretischen Volumens ein Produkt aus der Anzahl der Pumpzyklen, vorzugsweise die Anzahl der Umdrehungen oder Hübe der mindestens einen Pumpe (1), und einem Kalibrierwert umfasst, wobei bei der Anpassung der Förderformel der Kalibrierwert angepasst wird, vorzugsweise wobei die Anpassung nur dann erfolgt, wenn der Kalibrierwert einen Grenzwert überschreitet.

15. Verfahren nach einem der Ansprüche 11 bis 14, wobei der Füllstand (7) im Behälter (3) laufend gemessen wird, vorzugsweise wobei
- die Kalibrierung laufend durchgeführt wird, und/oder
- für die Kalibrierung die Messkurve des Füllstands mit der Sollkurve des geförderten Volumens verglichen wird, und/oder
wobei das Verfahren
- zur Initialkalibrierung nach der Installation oder einer Wartung verwendet wird, und/oder
- zur Nachkalibrierung während dem Betrieb verwendet wird.
